# EUROPEAN PATENT APPLICATION

(11) **EP 4 617 673 A1**
(43) Date of publication of application: **17.09.2025**
(21) Application number: 23888378.9
(22) Date of filing: 27.09.2023
(51) Int. Cl.: G01N 35/10

(54) **AUTOMATIC ANALYZER**

(30) Priority: 07.11.2022 JP 2022177941
(71) Applicant: HITACHI HIGH-TECH CORPORATION, Tokyo 105-6409 (JP)
(72) Inventor: ETOH, Jun, Tokyo 100-8280 (JP); NAKAJIMA, Satoshi, Tokyo 105-6409 (JP); OCHI, Manabu, Tokyo 100-8280 (JP); SUZUKI, Yoichiro, Tokyo 105-6409 (JP)
(74) Representative: Mewburn Ellis LLP
(86) International application number: PCT/JP2023/035251
(87) International publication number: WO 2024/101025

(57) **Abstract**

The present invention provides an automatic analyzing apparatus that can precisely adjust the position of a dispensing nozzle relative to a dispensation target object in a short period of time. An automatic analyzing apparatus (10) according to the present invention includes a dispensing apparatus (11) including a dispensing nozzle (113) that suctions and discharges liquid, a dispensation target object (200) which is a container that contains the liquid suctioned and discharged by the dispensing nozzle (113), an image-capturing section (122) that captures an image of the dispensing nozzle (113) and the dispensation target object (200), and a control section (111) that controls the dispensing apparatus (11) and the image-capturing section (122). It is assumed that a distance in an up-down direction between a tip (113a) of the dispensing nozzle (113) and an upper end of the dispensation target object (200) is a relative height (L2) of the dispensing nozzle (113) and the dispensation target object (200). The control section (111) acquires the relative height (L2), and, by using a pre-given relation between the relative height (L2) and the number of calibration pixels, calibrates a target position (202) of the tip (113a) of the dispensing nozzle (113) on the dispensation target object (200) or calibrates a position of the tip (113a) of the dispensing nozzle (113) in the image (201) captured by the image-capturing section (122).

## Description

### Technical Field

The present invention relates to an automatic analyzing apparatus.

### Background Art

Automatic analyzing apparatuses, for example, automatic biochemical analyzing apparatuses, analyze components of a biological sample (hereinbelow, referred to as a "sample") such as serum or urine. In such an automatic biochemical analyzing apparatus, typically, a sample and a reagent are dispensed to a reaction cell with use of a dispensing nozzle and are caused to react therein, and changes in color tone or turbidity generated in the reaction liquid are optically measured with a photometry unit such as a spectrophotometer. If the position of the dispensing nozzle is aligned with a target position on a dispensation target object such as a reaction cell at the time of dispensation, the dispensation can be performed precisely. in view of this, in a case where the position of the dispensing nozzle and the target position are misaligned at the time of dispensation, the dispensation precision is affected; as a result, the reliability of the automatic analyzing apparatus is also affected. In order to correct such a positional misalignment of a dispensing nozzle, typically, operators **(e.g.,** maintenance staff or users) regularly perform maintenance to adjust the position of the dispensing nozzle. However, because operators make adjustments visually in such maintenance, it is timeconsuming, variations in the adjustment position occur depending on operators, and so on.

In view of this, it is possible to enhance the efficiency of adjustment work and prevent the analysis precision from lowering due to variations in the adjustment position by capturing an image of the tip of a dispensing nozzle with use of an image-capturing apparatus such as a CCD camera and determining the position of the dispensing nozzle.

An example of a technology to easily and accurately adjust the position of a moving portion such as a dispensing nozzle in conventional automatic analyzing apparatuses is described in Patent Document 1. A specimen processing apparatus described in Patent Document 1 includes a moving mechanism that is movable for processing a specimen, an image-capturing section that is attached to the moving mechanism in such a manner as to be movable integrally therewith and that captures an image of a target object that the moving mechanism is about to access, and adjusting means for adjusting the moving mechanism relative to the target object on the basis of the image acquired by the image-capturing section.

### Prior Art Document

### Patent Document

Patent Document 1: JP-2012-32310-A

### Summary of the Invention

### Problems to be Solved by the Invention

An image-capturing apparatus that captures images of the tip of a dispensing nozzle in an automatic analyzing apparatus is preferably lightweight. A lightweight image-capturing apparatus (e.g., a monocular camera) provides an advantage in terms of a high degree of freedom of installation location and a low cost, but it is difficult to accurately acquire distances in the depth direction (perspective direction) from captured images. Because of this, for example, in conventional technologies such as the technology described in Patent Document 1, there is a possibility that the position of a dispensing nozzle relative to a dispensation target object (e.g., a reaction cell) cannot be adjusted accurately depending on an image-capturing apparatus used and the analysis precision lowers.

An object of the present invention is to provide an automatic analyzing apparatus that can precisely adjust the position of a dispensing nozzle relative to a dispensation target object in a short period of time.

### Means for Solving the Problems

An automatic analyzing apparatus according to the present invention includes a dispensing apparatus including a dispensing nozzle that suctions and discharges liquid, a dispensation target object which is a container that contains the liquid suctioned and discharged by the dispensing nozzle, an image-capturing section that captures an image of the dispensing nozzle and the dispensation target object, and a control section that controls the dispensing apparatus and the image-capturing section. It is assumed that a distance in an up-down direction between a tip of the dispensing nozzle and an upper end of the dispensation target object is a relative height of the dispensing nozzle and the dispensation target object. The control section acquires the relative height, and, by using a pre-given relation between the relative height and the number of calibration pixels, calibrates a target position of the tip of the dispensing nozzle on the dispensation target object or calibrates a position of the tip of the dispensing nozzle in the image captured by the image-capturing section.

### Advantages of the Invention

The present invention can provide an automatic analyzing apparatus that can precisely adjust the position of a dispensing nozzle relative to a dispensation target object in a short period of time.

### Brief Description of the Drawings

FIG. 1 is a schematic diagram depicting a configuration of an automatic analyzing apparatus according to a first embodiment of the present invention.
FIG. 2 is a diagram depicting a configuration of a dispensing apparatus included in the automatic analyzing apparatus according to the first embodiment.
FIG. 3 is a diagram depicting a configuration of a drive section included in the dispensing apparatus.
FIG. 4 is a flowchart depicting the procedure of a process of adjusting the position of a dispensing nozzle of the dispensing apparatus in the automatic analyzing apparatus according to the first embodiment.
FIG. 5A is a figure depicting the dispensing nozzle having approached a dispensation target object at Step S103 in FIG. 4.
FIG. 5B is a figure depicting the tip of the nozzle having approached the dispensation target object at Step S104 in FIG. 4.
FIG. 6 is a figure depicting an example of an output image captured by an image-capturing section in the first embodiment.
FIG. 7 is a figure depicting an example of a relation between a relative height L2 and the number of calibration pixels.
FIG. 8 is a figure depicting an example of an output image captured when a control section calibrates the position of the tip of the nozzle in the first embodiment.
FIG. 9 is a figure depicting a configuration in which an external image-capturing section that the automatic analyzing apparatus includes outside the dispensing apparatus in a second embodiment of the present invention measures the relative height L2**.**
FIG. 10 is a flowchart depicting the procedure of a process of measuring the relative height L2 with use of the external image-capturing section in the second embodiment.
FIG. 11 is a figure depicting an example of an output image in the second embodiment.
FIG. 12 is a flowchart depicting the procedure of a process of adjusting the position of the dispensing nozzle of the dispensing apparatus in the automatic analyzing apparatus according to a third embodiment of the present invention.
FIG. 13A is a figure depicting the dispensing nozzle having moved to be positioned above a reference member at Step S303 in FIG. 12.
FIG. 13B is a figure depicting the tip of the nozzle determined as being in contact with the reference member at Step S305 in FIG. 12.
FIG. 14 is a figure depicting the tip of the nozzle having approached the dispensation target object at Step S307 in FIG. 12.
FIG. 15 is a flowchart depicting the procedure of a process of measuring a postural change caused by a configurational change of the dispensing apparatus in the automatic analyzing apparatus according to a fourth embodiment of the present invention.
FIG. 16A is a figure depicting an arm and the dispensing nozzle of the dispensing apparatus after the end of Step S403 in FIG. 15.
FIG. 16B is a figure depicting the arm and the dispensing nozzle of the dispensing apparatus after the end of Step S403 performed after Step S407 in FIG. 15.
FIG. 17 is a flowchart depicting the procedure of a process of measuring a postural change caused by a configurational change of the dispensing apparatus, from an image captured by the image-capturing section in the fourth embodiment.
FIG. 18 is a figure depicting an example of an output image captured by the image-capturing section in the fourth embodiment.

### Modes for Carrying Out the Invention

An automatic analyzing apparatus according to the present invention can capture an image of the tip of a dispensing nozzle with use of an image-capturing apparatus, adjust the position of the dispensing nozzle relative to a dispensation target object (e.g., a container containing liquid such as a reaction cell), and cause the position of the tip of the dispensing nozzle to be aligned with a target position on the dispensation target object. Independently of an image-capturing apparatus to be used, even if, for example, a lightweight image-capturing apparatus such as a monocular camera is used, the automatic analyzing apparatus according to the present invention can precisely adjust the position of the dispensing nozzle relative to the dispensation target object. Positional adjustments of the dispensing nozzle are made not by an operator but by the automatic analyzing apparatus using images captured by the image-capturing apparatus. Accordingly, the adjustments can be implemented in a short period of time. Because of this, the automatic analyzing apparatus according to the present invention can reduce time required for positional adjustments of the dispensing nozzle, and can achieve both reduced maintenance costs and enhanced analysis precision.

Hereinbelow, the automatic analyzing apparatus according to embodiments of the present invention is explained in detail with reference to the figures. Note that identical or corresponding constituent elements in the figures used in the present specification are given identical reference characters, and repetitive explanation of these constituent elements is omitted in some cases.

### First Embodiment

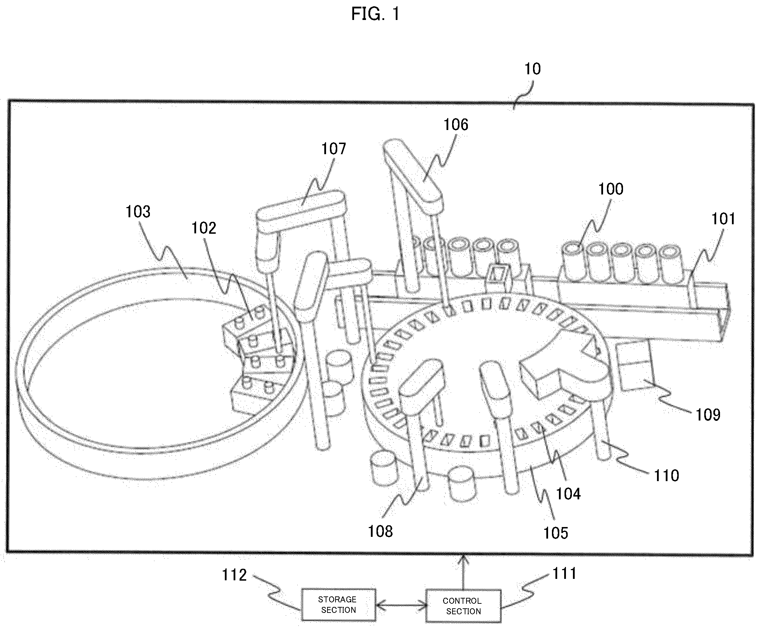

FIG. 1 is a schematic diagram depicting a configuration of an automatic analyzing apparatus 10 according to a first embodiment of the present invention. The automatic analyzing apparatus 10 is an apparatus for dispensing a sample and a reagent to reaction cells 104 with use of a dispensing mechanism and measuring a reaction liquid obtained by a chemical reaction between the sample and the reagent inside the reaction cells 104 to analyze components.

As main constituent elements, the automatic analyzing apparatus 10 includes the reaction cells 104, a reaction disk 105, sample containers 100, a sample rack 101, a sample dispensing mechanism 106, reagent bottles 102, a reagent disk 103, a reagent dispensing mechanism 107, a stirring unit 108, a measurement unit 109, a cleaning unit 110, a control section 111, and a storage section 112.

The reaction cells 104 are containers for containing a mixed liquid obtained by mixing the sample and the reagent, and a plurality of the reaction cells 104 are arrayed on the top of the reaction disk 105. The mixed liquid obtained by a chemical reaction between the sample and the reagent is called a reaction liquid.

The reaction disk 105 is a rotatable disk-shaped member, and a plurality of the reaction cells 104 are arranged along the circumference of the reaction disk 105.

The sample containers 100 are containers for containing a liquid sample, and are placed on the sample rack 101.

The sample rack 101 is installed close to the reaction disk 105, and a plurality of the sample containers 100 containing the sample are arranged on the sample rack 101.

The sample dispensing mechanism 106 is a mechanism that is capable of rotational movement and up-down movement, and is installed between the reaction disk 105 and the sample rack 101. The sample dispensing mechanism 106 moves horizontally (moves rotationally) along an arc about its rotation axis, and also moves in the up-down direction to dispense the sample suctioned from the sample containers 100 to the reaction cells 104.

The reagent bottles 102 are containers for containing the liquid reagent, and are placed on the reagent disk 103.

The reagent disk 103 is a rotatable disk-shaped storage container, and a plurality of the reagent bottles 102 containing the reagent are arranged along the circumference of the reagent disk 103. Detergent bottles containing a detergent, diluent bottles containing a diluent, pretreatment reagent bottles containing a pretreatment reagent, and the like can also be placed on the reagent disk 103. The reagent disk 103 is kept cool.

The reagent dispensing mechanism 107 is a mechanism that can move rotationally and in the up-down direction, and is installed between the reaction disk 105 and the reagent disk 103. The reagent dispensing mechanism 107 moves horizontally (moves rotationally) and in the up-down direction, and dispenses, to the reaction cells 104, the reagent, the detergent liquid, the diluent, and the pretreatment reagent suctioned from the reagent bottles 102, the detergent bottles, the diluent bottles, and the pretreatment reagent bottles, respectively. Note that the detergent bottles, the diluent bottles, and the pretreatment reagent bottles are not depicted in the figure.

The stirring unit 108 is a mechanism that mixes the sample and the reagent dispensed to the reaction cells 104, and is installed around the reaction disk 105.

The measurement unit 109 is a mechanism for irradiating the reaction liquid contained in the reaction cells 104 with light and measuring the absorbance of light transmitted through the reaction liquid, and is installed around the reaction disk 105.

The cleaning unit 110 is a mechanism that cleans the insides of the reaction cells 104, and is installed around the reaction disk 105.

The control section 111 is connected to the above-described constituent elements of the automatic analyzing apparatus 10. The control section 111 controls operation performed by these constituent elements, analyzes component amounts of the reaction liquid, and so on.

The storage section 112 is connected to the control section 111, and stores information about control of the constituent elements of the automatic analyzing apparatus 10 (e.g., control parameters and positions for each sequence), measurement results of the measurement unit 109 (e.g., absorbance data), and the like.

The automatic analyzing apparatus 10 executes a sample analysis process according to the following procedure.

First, when the sample containers 100 placed on the sample rack 101 are conveyed close to the reaction disk 105, the sample dispensing mechanism 106 dispenses the sample contained in the sample containers 100 to the reaction cells 104 arranged on the reaction disk 105. Next, the reagent dispensing mechanism 107 dispenses the reagent to be used for analysis of the sample from the reagent bottles 102 placed on the reagent disk 103 to the reaction cells 104 to which the sample has been dispensed. Next, the stirring unit 108 stirs the mixed liquid of the sample and the reagent inside the reaction cells 104.

Thereafter, the measurement unit 109 irradiates the reaction liquid contained in the reaction cells 104 with light generated from a light source, and measures the absorbance of light transmitted through the reaction liquid. The control section 111 analyzes the amounts of components included in the sample from the absorbance of the reaction liquid measured by the measurement unit 109, on the basis of calibration curve data or the Beer-Lambert law.

Note that, as an example, an automatic analyzing apparatus that determines the concentration of a particular component included in the sample by using the measurement unit 109 is explained in the present embodiment. It should be noted that the technology disclosed in the present specification can be used for an automatic analyzing apparatus that performs measurement of a sample by using a measurement apparatus other than the measurement unit 109 (e.g., an immunology automatic analyzing apparatus or a coagulation automatic analyzing apparatus).

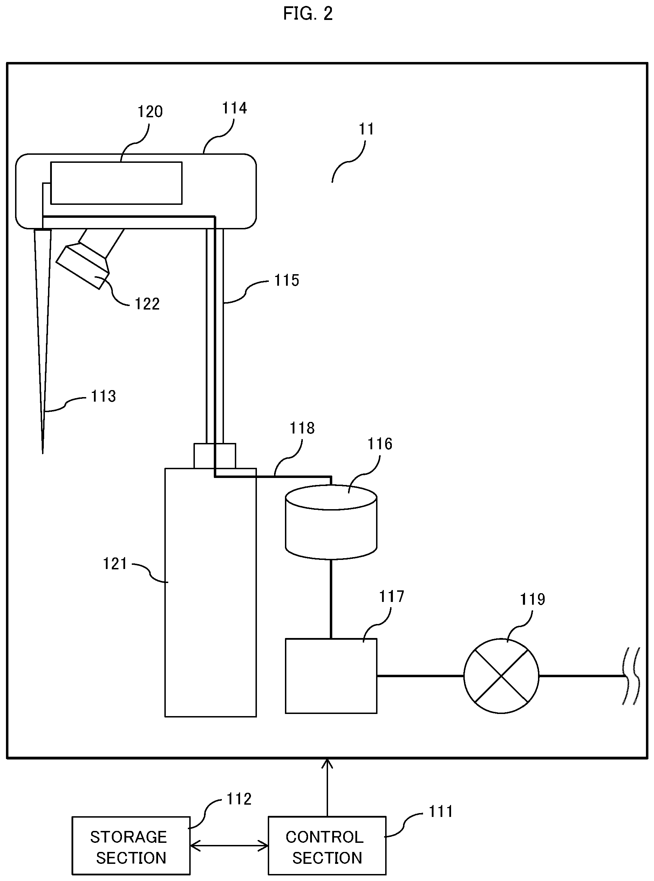

FIG. 2 is a diagram depicting a configuration of a dispensing apparatus 11 included in the automatic analyzing apparatus 10 according to the present embodiment. Hereinbelow, the sample dispensing mechanism 106 and the reagent dispensing mechanism 107 are collectively referred to as the dispensing apparatus 11. That is, by explaining the dispensing apparatus 11, both the sample dispensing mechanism 106 and the reagent dispensing mechanism 107 are explained.

As main constituent elements, the dispensing apparatus 11 includes an arm 114, a shaft 115, a dispensing nozzle 113, a pressure sensor 116, a syringe pump 117, a pipe 118, a solenoid valve 119, a contact detection sensor 120, and a drive section 121. The dispensing apparatus 11 further includes an image-capturing section 122. The control section 111 controls the dispensing apparatus 11 and the image-capturing section 122.

The arm 114 can move rotationally (move horizontally), is installed on the top of the shaft 115, and holds the dispensing nozzle 113. The arm 114 can move in the up-down direction by lifting/lowering of the shaft 115.

The shaft 115 is a columnar member that can be lifted/lowered by movement or extension/retraction in the up-down direction.

The dispensing nozzle 113 is installed on the arm 114, and suctions and discharges liquid such as the sample or the reagent. Hereinbelow, the dispensing nozzle 113 is also simply called the nozzle 113.

Dispensation target objects of the dispensing apparatus 11 are containers containing liquid that the dispensing nozzle 113 suctions and discharges. In the present embodiment, the dispensation target objects are the reaction cells 104, the sample containers 100, and the reagent bottles 102, and the detergent bottles, the diluent bottles, and the pretreatment reagent bottles can also be included in the dispensation target objects.

The dispensing nozzle 113, the pressure sensor 116, and the syringe pump 117 are interconnected by the pipe 118, and form a dispensing flow path. This dispensing flow path is configured such that its tip side is opened by the dispensing nozzle 113, and its base side is opened and closed by the solenoid valve 119.

The contact detection sensor 120 is a sensor that is provided to the arm 114, is connected with the dispensing nozzle 113, and detects contact between the dispensing nozzle 113 and liquid (a sample or a reagent) or an object (e.g., a dispensation target object). For example, the contact detection sensor 120 can include an electrostatic capacitance sensor or the like.

When the dispensing apparatus 11 dispenses liquid (a sample or a reagent), the dispensing apparatus 11 immerses the tip of the dispensing nozzle 113 in the liquid on the basis of a signal of the contact detection sensor 120, closes the solenoid valve 119, and suctions or discharges the liquid by the syringe pump 117.

The drive section 121 includes a mechanism for driving the arm 114 and the shaft 115, and drives the arm 114 and the shaft 115 under control of the control section 111. The control section 111 controls the drive section 121 by receiving a signal from a sensor included in the automatic analyzing apparatus 10 or by transmitting a drive signal for a motor included in the drive section 121. The storage section 112 can store signals from the sensor and driving conditions and drive states (e.g., rotation directions and rotation amounts) of the motor.

The image-capturing section 122 is an image-capturing apparatus including an image-capturing element such as a CCD. For example, the image-capturing section 122 is attached near the tip of the arm 114, and can capture images of an area including the dispensing nozzle 113 and a dispensation target object. Since the image-capturing section 122 is fixed to the arm 114, the position of the image-capturing section 122 relative to the dispensing nozzle 113 does not change even if the arm 114 moves, and the image-capturing section 122 can always capture images of an area including the tip of the dispensing nozzle 113. The automatic analyzing apparatus 10 according to the present embodiment can obtain, by using the image-capturing section 122, images from which the positional difference between a dispensation target object and the tip of the dispensing nozzle 113 can be measured.

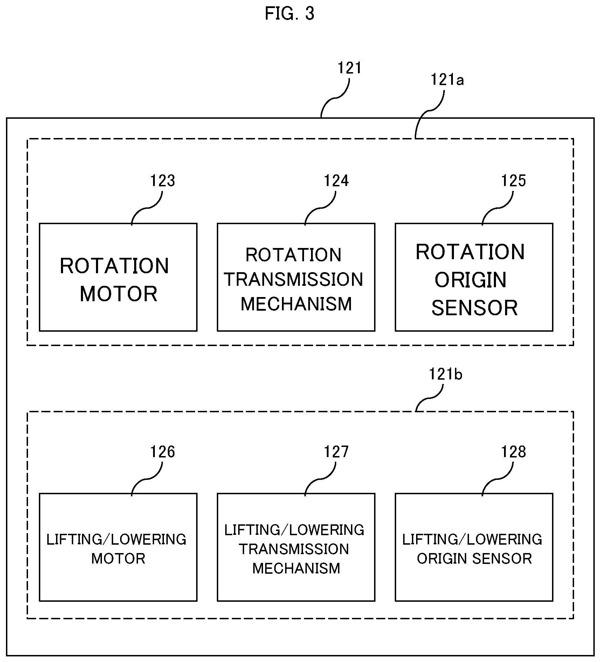

FIG. 3 is a diagram depicting a configuration of the drive section 121 included in the dispensing apparatus 11. The drive section 121 includes a rotation drive section 121a that rotates the arm 114 and a lifting/lowering drive section 121b that lifts/lowers the shaft 115.

The rotation drive section 121a includes a rotation motor 123, a rotation transmission mechanism 124, and a rotation origin sensor 125. The rotation motor 123 generates rotational power, and rotates the arm 114 to move the dispensing nozzle 113 in the horizontal direction. The rotation transmission mechanism 124 includes a mechanism (e.g., a belt transmission mechanism, a gear mechanism, etc.) that transmits the rotational power of the rotation motor 123 to the rotation axis of the arm 114 while decelerating the rotational power. The rotation origin sensor 125 includes an apparatus (e.g., a photointerrupter, etc.) that detects the position of a reference portion (a position in the rotation direction) of the rotation transmission mechanism 124 at the time when a reference portion of the arm 114 is positioned at the origin.

The lifting/lowering drive section 121b includes a lifting/lowering motor 126, a lifting/lowering transmission mechanism 127, and a lifting/lowering origin sensor 128. The lifting/lowering motor 126 generates rotational power, and lifts/lowers the shaft 115 to move the dispensing nozzle 113 in the up-down direction. The lifting/lowering transmission mechanism 127 includes a mechanism (e.g., a belt transmission mechanism, a rack-pinion mechanism, etc.) that transmits the rotational power of the lifting/lowering motor 126 to the shaft 115 after converting the rotational power into linear motive power in the up-down direction. The lifting/lowering origin sensor 128 includes an apparatus (e.g., a photointerrupter, etc.) that detects the position of a reference portion (a position in the up-down direction) of the lifting/lowering transmission mechanism 127 at the time when a reference portion of the shaft 115 is positioned at the origin.

The rotation directions and rotation amounts of the rotation motor 123 and the lifting/lowering motor 126 are sensed by rotary encoders or pulse counters installed on the motors 123 and 126.

When the reference portion of the arm 114 is positioned at the origin, the tip of the dispensing nozzle 113 is at a predetermined reference position in the horizontal direction. When the reference portion of the shaft 115 is positioned at the origin, the tip of the dispensing nozzle 113 is at a predetermined reference position in the up-down direction.

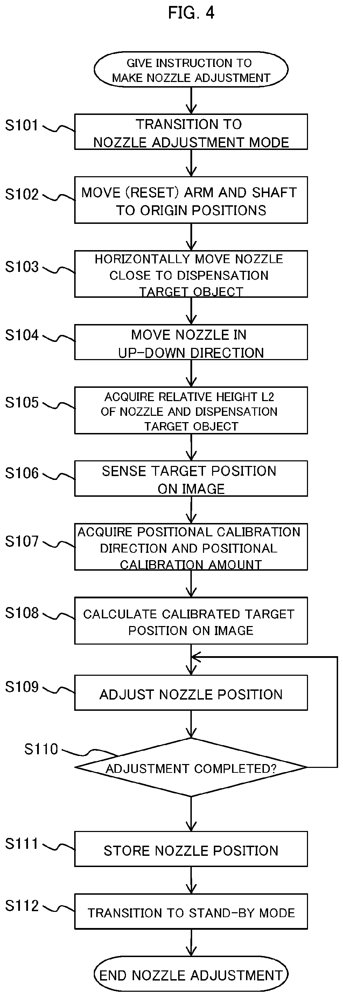

FIG. 4 is a flowchart depicting the procedure of a process of adjusting the position of the dispensing nozzle 113 of the dispensing apparatus 11 in the automatic analyzing apparatus 10 according to the present embodiment. For example, positional adjustments of the dispensing nozzle 113 can be implemented before the operation of the automatic analyzing apparatus 10 or at the time of maintenance of the automatic analyzing apparatus 10. This process is started by the transmission of an instruction to adjust the position of the dispensing nozzle 113 from the control section 111 to the dispensing apparatus 11.

At Step S101, upon receiving the instruction from the control section 111, the dispensing apparatus 11 transitions to a nozzle adjustment mode. In the nozzle adjustment mode, the position of the dispensing nozzle 113 is adjusted.

At Step S102, the control section 111 operates the drive section 121 of the dispensing apparatus 11, and moves the reference portions of the arm 114 and the shaft 115 to predetermined origin positions (resetting of the dispensing apparatus 11).

At Step S103, the control section 111 operates the drive section 121, horizontally moves the arm 114 by a predetermined distance by sequence control, and causes the dispensing nozzle 113 to approach a dispensation target object in the horizontal direction. At this time, since the position in the up-down direction of the reference portion of the shaft 115 is still at the origin, the position in the up-down direction of the dispensing nozzle 113 does not change.

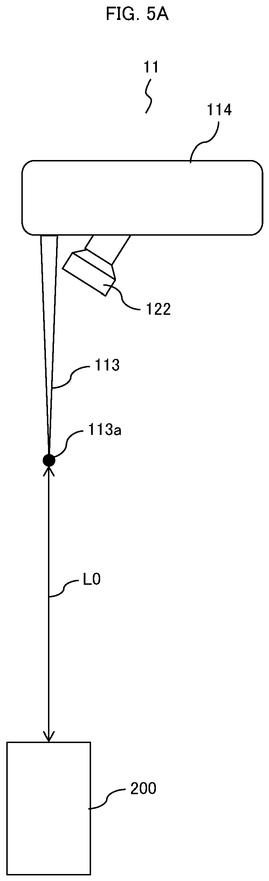

FIG. 5A is a figure depicting the dispensing nozzle 113 having approached a dispensation target object 200 at Step S103 in FIG. 4. In a case where a positional adjustment of the dispensing nozzle 113 has not been completed, there is a positional difference in the horizontal direction (the left-right direction in FIG. 5A) between the position of the tip 113a of the nozzle 113 and a target position of the tip 113a on the dispensation target object 200.

Note that the distance (a relative height L0) in the up-down direction between the tip 113a of the nozzle 113 and the upper end of the dispensation target object 200 in a state depicted in FIG. 5A (i.e., when the position in the up-down direction of the reference portion of the shaft 115 is at the origin) is a previously-known certain value. The storage section 112 has the value of the relative height L0 stored thereon.

The explanation is given with reference to FIG. 4 again.

At Step S104, the control section 111 operates the drive section 121, drives the shaft 115 in the up-down direction by a predetermined distance by sequence control, and moves the dispensing nozzle 113 in the up-down direction. For example, the control section 111 lowers the dispensing nozzle 113. As a result, the tip 113a of the nozzle 113 approaches the dispensation target object 200 in the up-down direction.

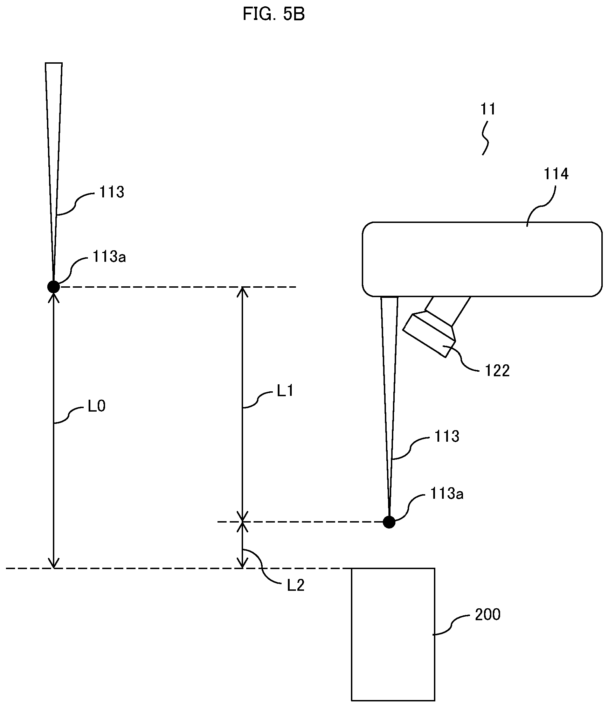

FIG. 5B is a figure depicting the tip 113a of the nozzle 113 having approached the dispensation target object 200 at Step S104. FIG. 5B also depicts the distance (relative height L0) in the up-down direction between the tip 113a of the nozzle 113 and the upper end of the dispensation target object 200 depicted in FIG. 5A, in order to depict the movement in the up-down direction of the tip 113a of the nozzle 113 in an easy-to-understand manner.

As depicted in FIG. 5B, it is assumed that the distance by which the shaft 115 is lifted/lowered at Step S104 is L1. The distance L1 is the moving distance in the up-down direction of the dispensing nozzle 113. The control section 111 can calculate the distance L1 by sensing the rotation direction and rotation amount of the lifting/lowering motor 126. It is assumed that the lifting/lowering distance of the shaft 115 per rotation of the lifting/lowering motor 126 is known in advance.

The explanation is given with reference to FIG. 4 again.

At Step S105, the control section 111 acquires the distance (a relative height L2) in the up-down direction between the tip 113a of the nozzle 113 and the upper end of the dispensation target object 200. As depicted in FIG. 5B, the relative height L2 is determined as the difference between the relative height L0 stored on the storage section 112 and the distance L1 calculated by the control section 111 (L2 = L0 - L1). The tip 113a of the nozzle 113 is positioned above the dispensation target object 200 by the relative height L2.

At Step S106, the image-capturing section 122 captures an image of an area including the dispensation target object 200 and the tip 113a of the nozzle 113. From an output image which is the image captured by the image-capturing section 122, the control section 111 senses the target position on the dispensation target object 200 in the image. The target position is a target position of the tip 113a of the nozzle 113 for performing dispensation precisely. The target position of the tip 113a of the nozzle 113 is a position specified as desired in advance, and, for example, can be specified as the center position of the dispensation target object 200.

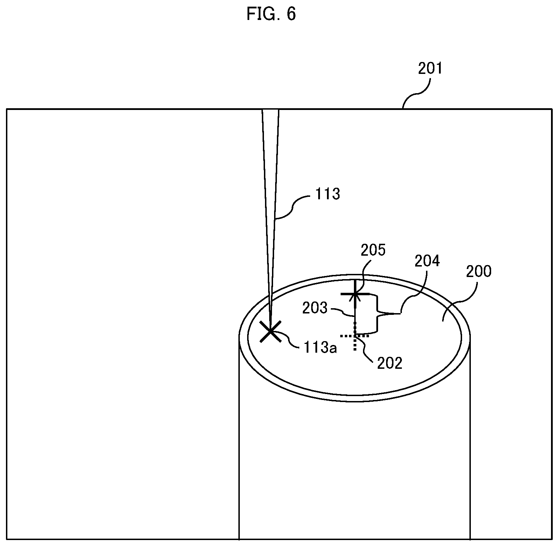

FIG. 6 is a figure depicting an example of an output image 201 captured by the image-capturing section 122. The output image 201 includes the dispensation target object 200, a target position 202 on the dispensation target object 200, and the tip 113a of the nozzle 113.

It should be noted that the target position 202 in the output image 201 is not a true target position. That is, even if the position of the tip 113a of the nozzle 113 is caused to be aligned with the target position 202 in the output image 201, the position of the tip 113a of the nozzle 113 is not necessarily aligned with the target position 202 when dispensation is actually performed. This is because information about the depth direction (perspective direction) is not included in the output image 201 and the target position 202 in the output image 201 does not take into consideration information about the relative height L2 (the distance in the up-down direction between the tip 113a of the nozzle 113 and the upper end of the dispensation target object 200).

In view of this, in the present embodiment, as explained below, the target position 202 is calibrated using a positional calibration direction 203 and a positional calibration amount 204, and a calibrated target position 205 is acquired. The calibrated target position 205 is the target position of the tip 113a of the nozzle 113 in the output image 201. By causing the position of the tip 113a of the nozzle 113 to be aligned with the calibrated target position 205 in the output image 201, the tip 113a of the nozzle 113 is aligned with the actual target position 202 (e.g., the center position of the dispensation target object 200) when dispensation is actually performed.

The explanation is given with reference to FIG. 4 again.

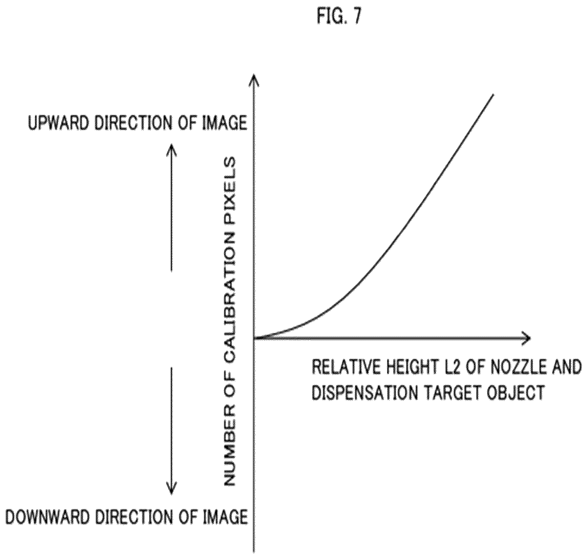

At Step S107, the control section 111 acquires the positional calibration direction 203 and the positional calibration amount 204 in the output image 201. The control section 111 determines the positional calibration direction 203 and the positional calibration amount 204 from the relative height L2 with use of a relation between the relative height L2 and the number of calibration pixels depicted in FIG. 7. The relation between the relative height L2 and the number of calibration pixels is given in advance.

FIG. 7 is a figure depicting an example of the relation between the relative height L2 (the distance in the up-down direction between the tip 113a of the nozzle 113 and the upper end of the dispensation target object 200) and the number of calibration pixels. In the relation depicted in FIG. 7, a positive or negative number of calibration pixels is given for one value of the relative height L2. In a case where the number of calibration pixels is a positive number, the positional calibration direction 203 is the upward direction in the output image 201 in FIG. 6. In a case where the number of calibration pixels is a negative number, the positional calibration direction 203 is the downward direction in the output image 201 in FIG. 6. The positional calibration amount 204 is given by a value of the number of calibration pixels (the number of pixels in the output image 201).

The relation between the relative height L2 and the number of calibration pixels depicted in FIG. 7 can be determined according to experiments or the like in advance. For example, by determining, as numbers of pixels, positional changes of the tip 113a of the nozzle 113 in the output image 201 when the relative height L2 is increased from zero, the relation depicted in FIG. 7 can be obtained. The storage section 112 has stored thereon data regarding the relation depicted in FIG. 7.

The explanation is given with reference to FIG. 4 again.

At Step S108, the control section 111 calculates the calibrated target position 205 in the output image 201 by using the target position 202 in the output image 201, the positional calibration direction 203, and the positional calibration amount 204 (FIG. 6). The control section 111 treats, as the calibrated target position 205, a position obtained by moving the target position 202 by a distance (the number of pixels) represented by the positional calibration amount 204 in a direction represented by the positional calibration direction 203. The calibrated target position 205 is the target position of the tip 113a of the nozzle 113 after the position of the dispensing nozzle 113 is adjusted.

At Step S109, the control section 111 adjusts the position of the tip 113a of the nozzle 113 such that the position of the tip 113a of the nozzle 113 is aligned with the calibrated target position 205 in the output image 201 (FIG. 6). The control section 111 horizontally moves the arm 114 to adjust the position of the tip 113a of the nozzle 113. The positional adjustment of the tip 113a of the nozzle 113 may be performed automatically by the control section 111 or may be performed by operation of the control section 111 by an operator.

At Step S110, the control section 111 determines whether or not the position of the tip 113a of the nozzle 113 has been able to be adjusted in such a manner as to be aligned with the calibrated target position 205 in the output image 201 (FIG. 6). For example, the control section 111 determines whether or not the adjustment has been able to be made, by using the output image 201 captured by the image-capturing section 122 and comparing the position of the tip 113a of the nozzle 113 and the calibrated target position 205. In a case where the adjustment of the position of the tip 113a of the nozzle 113 has been able to be made, it is determined that the adjustment has been completed, and the procedure proceeds to Step S111. In a case where the adjustment of the position of the tip 113a of the nozzle 113 has not been able to be made, it is determined that the adjustment has not been completed, and the procedure proceeds to Step S109.

At Step S111, the control section 111 stores, on the storage section 112, the position of the tip 113a of the nozzle 113 obtained after the adjustment has been completed.

At Step S112, the control section 111 operates the drive section 121, moves the reference portions of the arm 114 and the shaft 115 to the origin positions, and causes the dispensing apparatus 11 to transition to a stand-by mode. The dispensing apparatus 11 in the stand-by mode is in a waiting state where a dispensation process can be executed.

By the procedure above, the process of adjusting the position of the dispensing nozzle 113 ends.

In the process described in the explanation above, the position of the dispensing nozzle 113 is adjusted by calibrating the target position 202 of the tip 113a of the nozzle 113 to the calibrated target position 205 in the output image 201, and a positional difference between the position of the tip 113a of the nozzle 113 and the target position of the tip 113a on the dispensation target object 200 is eliminated.

It is also possible in the present embodiment that the position of the dispensing nozzle 113 is adjusted by calibrating the position of the tip 113a of the nozzle 113 in the output image 201 and a positional difference between the position of the tip 113a of the nozzle 113 and the target position of the tip 113a on the dispensation target object 200 is eliminated.

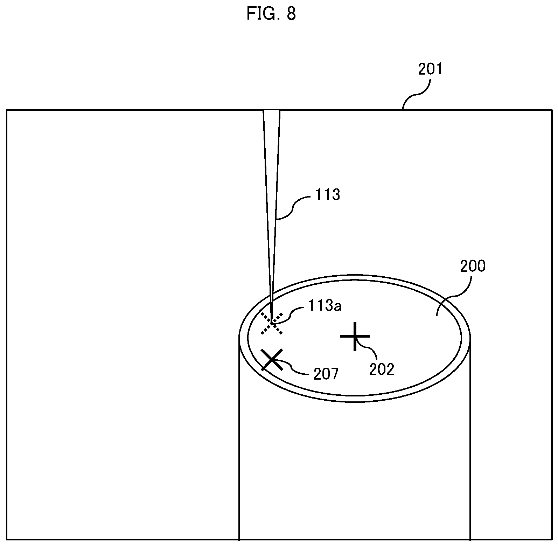

FIG. 8 is a figure depicting an example of the output image 201 captured when the control section 111 calibrates the position of the tip 113a of the nozzle 113.

The control section 111 can determine a calibrated position of the tip 113a of the nozzle 113 (hereinbelow, called a "calibrated tip position 207") similarly to the manner in which the calibrated target position 205 is determined. That is, the control section 111 determines the positional calibration direction 203 and the positional calibration amount 204 from the relative height L2 by using the relation between the relative height L2 and the number of calibration pixels depicted in FIG. 7, and determines the calibrated tip position 207 from the position of the tip 113a of the nozzle 113 by using the positional calibration direction 203 and the positional calibration amount 204. It should be noted that the positional calibration direction 203 is opposite, in the up-down direction, to that in the case where the calibrated target position 205 is determined.

In a case where the position of the tip 113a of the nozzle 113 is calibrated, it is not necessary to calibrate the target position 202 of the tip 113a of the nozzle 113 in the output image 201.

At Step S109 in FIG. 4, the control section 111 adjusts the calibrated tip position 207 such that the calibrated tip position 207 is aligned with the target position 202 in the output image 201 (FIG. 8). The control section 111 horizontally moves the arm 114 to adjust the calibrated tip position 207.

At Step S110 in FIG. 4, the control section 111 determines whether or not the calibrated tip position 207 has been able to be adjusted in such a manner as to be aligned with the target position 202 in the output image 201.

As explained above, by using the relative height L2 calculated by the control section 111 (the distance in the up-down direction between the tip 113a of the nozzle 113 and the upper end of the dispensation target object 200) and the output image 201 captured by the image-capturing section 122, the automatic analyzing apparatus 10 according to the present embodiment calibrates the target position 202 of the tip 113a of the nozzle 113 or the position of the tip 113a of the nozzle 113 in the output image 201. Because of this, independently of the type of the image-capturing section 122 used, even if, for example, a lightweight image-capturing apparatus such as a monocular camera is used for the image-capturing section 122, the automatic analyzing apparatus 10 according to the present embodiment can precisely adjust the position of the dispensing nozzle 113 relative to the dispensation target object 200 in a short period of time. Further, it is possible to prevent variations in the adjustment position of the dispensing nozzle 113, and it is possible to prevent the analysis precision from lowering.

### Second Embodiment

The automatic analyzing apparatus 10 according to a second embodiment of the present invention is explained. The following mainly explains differences of the automatic analyzing apparatus 10 according to the present embodiment from the automatic analyzing apparatus 10 according to the first embodiment.

In the first embodiment, the relative height L2 (the distance in the up-down direction between the tip 113a of the nozzle 113 and the upper end of the dispensation target object 200) is determined as the difference between the relative height L0 stored on the storage section 112 and the distance L1 calculated by the control section 111.

In the present embodiment, the relative height L2 is determined by measurement using a sensor. The automatic analyzing apparatus 10 according to the present embodiment can include a sensor outside the dispensing apparatus 11, and measures the relative height L2 by using the sensor. The sensor may be provided for a use other than measurement of the relative height L2. For example, the automatic analyzing apparatus 10 includes an image-capturing section (external image-capturing section) different from the image-capturing section 122 outside the dispensing apparatus 11, and measures the relative height L2 by using the external image-capturing section.

Since the flowchart of a processing procedure of adjusting the position of the dispensing nozzle 113 of the dispensing apparatus 11 in the present embodiment is similar to the flowchart depicted in FIG. 4 except for the manner of determination of the relative height L2, detailed explanation thereof is omitted.

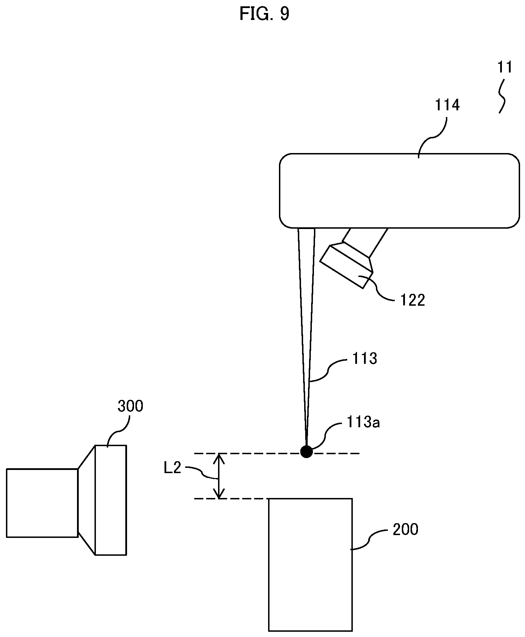

FIG. 9 is a figure depicting a configuration in which, in the present embodiment, an external image-capturing section 300 that the automatic analyzing apparatus 10 includes outside the dispensing apparatus 11 measures the relative height L2 (the distance in the up-down direction between the tip 113a of the nozzle 113 and the upper end of the dispensation target object 200).

The external image-capturing section 300 is an image-capturing apparatus including an image-capturing element such as a CCD. The external image-capturing section 300 is attached to any portion other than the dispensing apparatus 11 in the automatic analyzing apparatus 10, and can capture images of an area including the dispensing nozzle 113 and the dispensation target object 200.

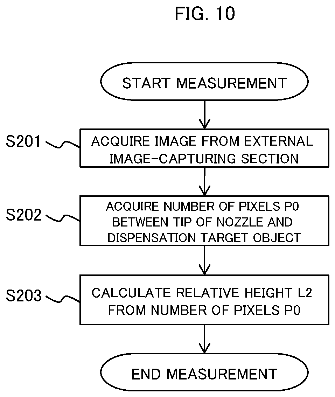

FIG. 10 is a flowchart depicting the procedure of a process of measuring the relative height L2 with use of the external image-capturing section 300 in the present embodiment.

At Step S201, the control section 111 acquires an output image which is an image captured by the external image-capturing section 300.

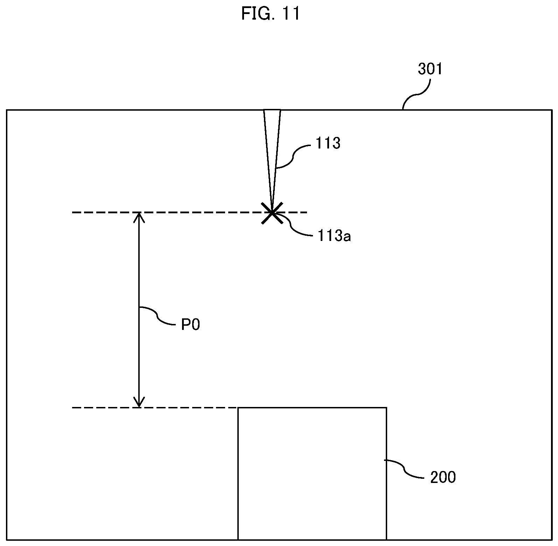

FIG. 11 is a figure depicting an example of an output image 301. In the output image 301, images of both the tip 113a of the nozzle 113 and the upper end of the dispensation target object 200 are captured. In the output image 301, the number of pixels in the up-down direction between the tip 113a of the nozzle 113 and the upper end of the dispensation target object 200 is P0.

The explanation is given with reference to FIG. 10 again.

At Step S202, the control section 111 acquires the number of pixels P0 in the up-down direction between the tip 113a of the nozzle 113 and the upper end of the dispensation target object 200 from the output image 301.

At Step S203, the control section 111 calculates the relative height L2 from the number of pixels P0. It is assumed that the relation between numbers of pixels and distances (lengths) in the output image 301 of the external image-capturing section 300 is known in advance.

In the present embodiment, the relative height L2 is measured using the external image-capturing section 300 by the procedure above. Then, with use of the relative height L2 and the output image 201 captured by the image-capturing section 122 fixed to the arm 114 of the dispensing apparatus 11, the target position 202 of the tip 113a of the nozzle 113 or the position of the tip 113a of the nozzle 113 in the output image 201 is calibrated.

### Third Embodiment

The automatic analyzing apparatus 10 according to a third embodiment of the present invention is explained. The following mainly explains differences of the automatic analyzing apparatus 10 according to the present embodiment from the automatic analyzing apparatus 10 according to the first embodiment.

In the first embodiment, the relative height L2 (the distance in the up-down direction between the tip 113a of the nozzle 113 and the upper end of the dispensation target object 200) is determined using the distance L1 by which the shaft 115 is lifted/lowered. The distance L1 is calculated by sensing the rotation direction and rotation amount of the lifting/lowering motor 126, and the lifting/lowering distance of the shaft 115 per rotation of the lifting/lowering motor 126 is known in advance.

In the present embodiment, the lifting/lowering distance of the shaft 115 per rotation of the lifting/lowering motor 126 is determined by calculation by the control section 111 using a reference member that can be installed on the dispensing apparatus 11. By calculating the lifting/lowering distance, the control section 111 can calibrate the target position 202 of the tip 113a of the nozzle 113 or the position of the tip 113a of the nozzle 113 in the output image 201, and adjust the position of the dispensing nozzle 113, taking into consideration machine differences or ageing of the lifting/lowering drive section 121b.

The reference member can be placed on the dispensing apparatus 11, and can be formed using any object that the tip 113a of the nozzle 113 can contact. The reference member may be an object not used for a dispensation process by the dispensing apparatus 11.

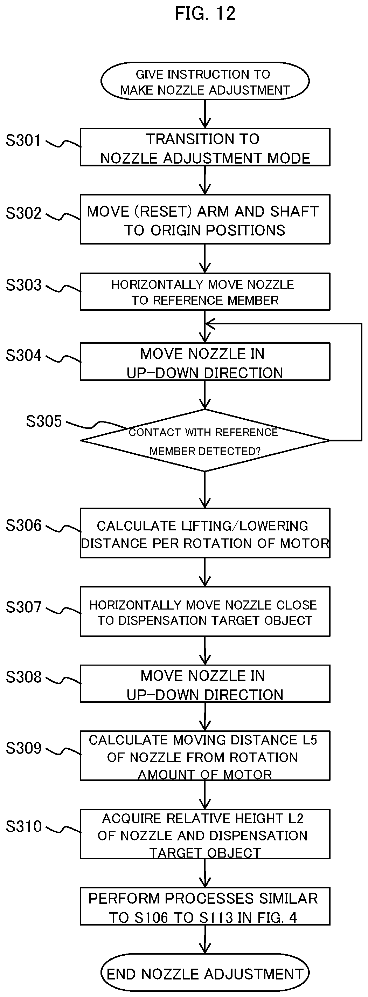

FIG. 12 is a flowchart depicting the procedure of a process of adjusting the position of the dispensing nozzle 113 of the dispensing apparatus 11 in the automatic analyzing apparatus 10 according to the present embodiment. The following mainly explains differences of the flowchart depicted in FIG. 12 from the flowchart depicted in FIG. 4 (the first embodiment). The reference member is installed on the dispensing apparatus 11.

At Steps S301 and S302, processes similar to Steps S101 to S102 in FIG. 4 are implemented.

At Step S303, the control section 111 operates the drive section 121, horizontally moves the arm 114, and moves the dispensing nozzle 113 such that the dispensing nozzle 113 is positioned above the reference member. At this time, since the position in the up-down direction of the reference portion of the shaft 115 is still at the origin, the position in the up-down direction of the dispensing nozzle 113 does not change.

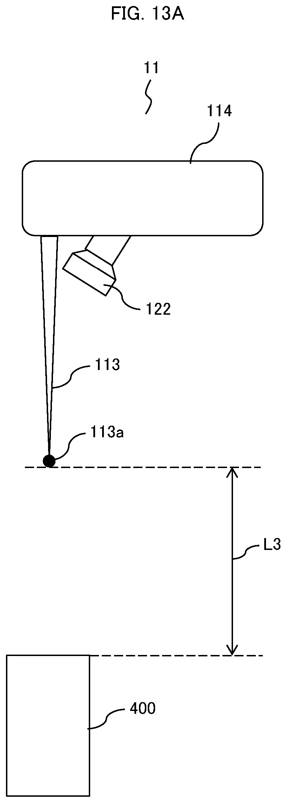

FIG. 13A is a figure depicting the dispensing nozzle 113 having moved to be positioned above a reference member 400 at Step S303. The distance (a relative height L3) in the up-down direction between the tip 113a of the nozzle 113 and the top side of the reference member 400 in the state depicted in FIG. 13A (i.e., when the position in the up-down direction of the reference portion of the shaft 115 is at the origin) is a previously-known certain value. The storage section 112 has the value of the relative height L3 stored thereon.

The explanation is given with reference to FIG. 12 again.

At Step S304, the control section 111 operates the drive section 121, drives the shaft 115 in the up-down direction by a predetermined distance by sequence control, and moves the dispensing nozzle 113 in the up-down direction. For example, the control section 111 lowers the dispensing nozzle 113. As a result, the tip 113a of the nozzle 113 approaches the reference member 400 in the up-down direction.

At Step S305, by using the contact detection sensor 120 (FIG. 2) provided to the arm 114, the control section 111 determines whether or not the tip 113a of the nozzle 113 is in contact with the top side of the reference member 400. In a case where the tip 113a of the nozzle 113 is in contact with the top side of the reference member 400, the procedure proceeds to Step S306. In a case where the tip 113a of the nozzle 113 is not in contact with the reference member 400, the procedure proceeds to Step S304.

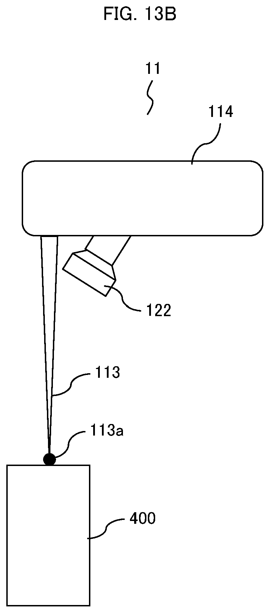

FIG. 13B is a figure depicting the tip 113a of the nozzle 113 determined at Step S305 as being in contact with the top side of the reference member 400. The dispensing nozzle 113 has lowered by the distance of the relative height L3 depicted in FIG. 13A, and the tip 113a is in contact with the reference member 400. The lifting/lowering distance of the shaft 115 (i.e., the moving distance of the tip 113a of the nozzle 113) is L3.

At Step S306, the control section 111 senses the amount of rotation of the lifting/lowering motor 126 from the start of movement of the dispensing nozzle 113 in the up-down direction to the contact of the tip 113a of the nozzle 113 with the top side of the reference member 400, and calculates the lifting/lowering distance of the shaft 115 per rotation of the lifting/lowering motor 126 by using the rotation amount and the relative height L3 stored on the storage section 112.

At Step S307, the control section 111 operates the drive section 121, horizontally moves the arm 114 by a predetermined distance by sequence control, and causes the dispensing nozzle 113 to approach the dispensation target object 200 in the horizontal direction. As a result, the tip 113a of the nozzle 113 approaches the dispensation target object 200 in the horizontal direction.

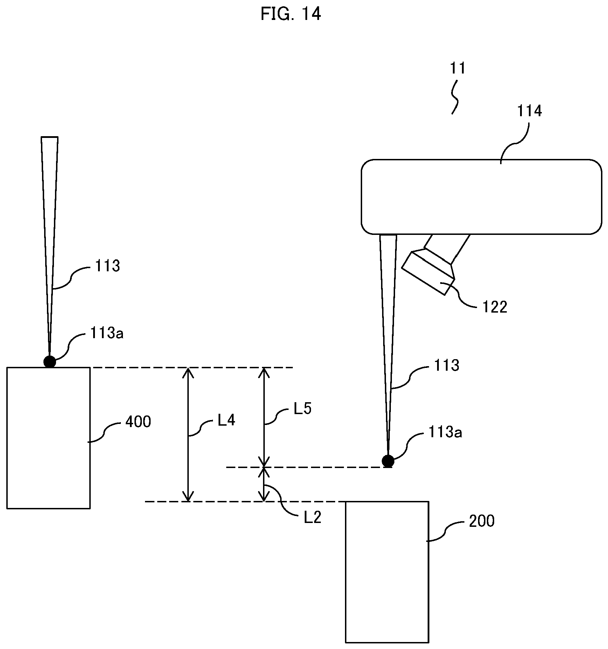

FIG. 14 is a figure depicting the tip 113a of the nozzle 113 having approached the dispensation target object 200 at Step S307. FIG. 14 also depicts the tip 113a of the nozzle 113 and the reference member 400 depicted in FIG. 13B, in order to depict the movement in the up-down direction of the tip 113a of the nozzle 113 in an easy-to-understand manner.

The distance (a relative height L4) in the up-down direction between the top side of the reference member 400 and the upper end of the dispensation target object 200 is a previously-known certain value. The storage section 112 has the value of the relative height L4 stored thereon.

The explanation is given with reference to FIG. 12 again.

At Step S308, the control section 111 operates the drive section 121, drives the shaft 115 in the up-down direction, and moves the dispensing nozzle 113 in the up-down direction. For example, the control section 111 lowers the dispensing nozzle 113 by a predetermined distance by sequence control. As a result, the tip 113a of the nozzle 113 approaches the dispensation target object 200 in the up-down direction.

As depicted in FIG. 14, it is assumed that, at Step S308, the dispensing nozzle 113 has moved in the up-down direction by a distance L5. The distance L5 is the moving distance in the up-down direction of the dispensing nozzle 113 at the time of the movement in the up-down direction of the dispensing nozzle 113 at Step S308 from the position at which the tip 113a is in contact with the top side of the reference member 400.

The explanation is given with reference to FIG. 12 again.

At Step S309, the control section 111 senses the rotation amount of the lifting/lowering motor 126 at the time of the movement in the up-down direction of the dispensing nozzle 113 at Step S308. Then, by using the rotation amount and the lifting/lowering distance of the shaft 115 per rotation of the lifting/lowering motor 126 calculated at Step S306, the control section 111 calculates the distance L5 depicted in FIG. 14 (the moving distance in the up-down direction of the dispensing nozzle 113 at Step S308).

At Step S310, the control section 111 acquires the relative height L2 (the distance in the up-down direction between the tip 113a of the nozzle 113 and the upper end of the dispensation target object 200). As depicted in FIG. 14, the relative height L2 is determined as the difference between the relative height L4 stored on the storage section 112 and the distance L5 calculated by the control section 111 (L2 = L4 - L5).

After Step S310, processes similar to Steps S106 to S113 in FIG. 4 are implemented.

In the automatic analyzing apparatus 10 according to the present embodiment, the control section 111 calculates the lifting/lowering distance of the shaft 115 per rotation of the lifting/lowering motor 126, and acquires the relative height L2 by using the lifting/lowering distance. Because of this, in the present embodiment, it is possible to calculate the relative height L2 taking into consideration machine differences or ageing of the lifting/lowering drive section 121b, calibrate the target position 202 of the tip 113a of the nozzle 113 or the position of the tip 113a of the nozzle 113 in the output image 201 on the basis of the relative height L2, and adjust the position of the dispensing nozzle 113.

### Fourth Embodiment

The automatic analyzing apparatus 10 according to a fourth embodiment of the present invention is explained. The following mainly explains differences of the automatic analyzing apparatus 10 according to the present embodiment from the automatic analyzing apparatus 10 according to the first embodiment.

In the automatic analyzing apparatus 10 according to the present embodiment, the image-capturing section 122 can be attached to and removed from the dispensing apparatus 11. The following explains an example in which the image-capturing section 122 can be attached to and removed from the arm 114, as an example.

The image-capturing section 122 is not installed on the arm 114 when the automatic analyzing apparatus 10 is in operation and performing analysis. The image-capturing section 122 is installed on the arm 114 only when the position of the dispensing nozzle 113 relative to the dispensation target object 200 is adjusted. Because of this, the dispensing apparatus 11 has different configurations when the automatic analyzing apparatus 10 is in operation and when a positional adjustment of the dispensing nozzle 113 is being made. Hence, in the automatic analyzing apparatus 10 according to the present embodiment, the position of the dispensing nozzle 113 needs to be adjusted taking into consideration a postural change of the dispensing apparatus 11 caused by such a configurational change (i.e., whether or not the image-capturing section 122 is installed on the arm 114).

In the present embodiment, a positional adjustment of the dispensing nozzle 113 with use of the image-capturing section 122 that can be attached to and removed from the arm 114 is explained. The position in the up-down direction of the tip 113a of the nozzle 113 changes between a case where the image-capturing section 122 is installed on the arm 114 and a case where the image-capturing section 122 is not installed on the arm 114. In the automatic analyzing apparatus 10 according to the present embodiment, the position of the dispensing nozzle 113 can be adjusted taking into consideration a postural change of the dispensing apparatus 11, by measuring the positional change of the tip 113a of the nozzle 113 with use of the reference member 400 explained in the third embodiment.

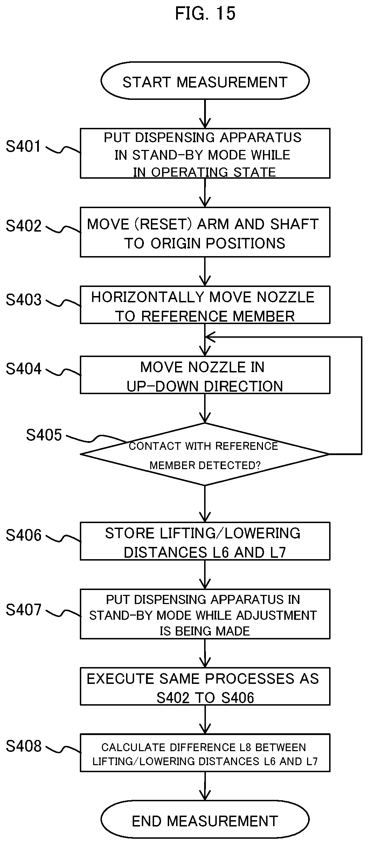

FIG. 15 is a flowchart depicting the procedure of a process of measuring a postural change caused by a configurational change of the dispensing apparatus 11 in the automatic analyzing apparatus 10 according to the present embodiment.

At Step S401, the control section 111 puts the dispensing apparatus 11 in the stand-by mode (waiting state) in a state where the automatic analyzing apparatus 10 is in operation. Since the automatic analyzing apparatus 10 is in operation (a state where the automatic analyzing apparatus 10 performs analysis), the image-capturing section 122 is not installed on the arm 114.

At Step S402, the control section 111 operates the drive section 121, and moves the reference portions of the arm 114 and the shaft 115 to the predetermined origin positions (resetting of the dispensing apparatus 11).

At Step S403, the control section 111 operates the drive section 121, horizontally moves the arm 114, and moves the dispensing nozzle 113 such that the dispensing nozzle 113 is positioned above the reference member 400. At this time, since the position in the up-down direction of the reference portion of the shaft 115 is still at the origin, the position in the up-down direction of the dispensing nozzle 113 does not change.

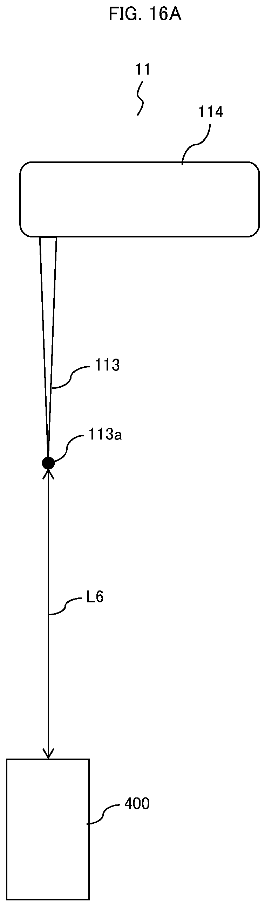

FIG. 16A is a figure depicting the arm 114 and the dispensing nozzle 113 of the dispensing apparatus 11 after the end of Step S403. The arm 114 is not provided with the image-capturing section 122. The reference portion of the shaft 115 is at the position of the origin in the up-down direction. The tip 113a of the nozzle 113 is positioned above the reference member 400.

The explanation is given with reference to FIG. 15 again.

At Step S404, the control section 111 operates the drive section 121, drives the shaft 115 in the up-down direction by a predetermined distance by sequence control, and moves the dispensing nozzle 113 in the up-down direction. For example, the control section 111 lowers the dispensing nozzle 113. As a result, the tip 113a of the nozzle 113 approaches the reference member 400 in the up-down direction.

At Step S405, by using the contact detection sensor 120 (FIG. 2) provided to the arm 114, the control section 111 determines whether or not the tip 113a of the nozzle 113 is in contact with the top side of the reference member 400. In a case where the tip 113a of the nozzle 113 is in contact with the top side of the reference member 400, the procedure proceeds to Step S406. In a case where the tip 113a of the nozzle 113 is not in contact with the reference member 400, the procedure proceeds to Step S404.

At Step S406, the control section 111 calculates a lifting/lowering distance L6 (FIG. 16A) by which the tip 113a of the nozzle 113 has moved since the reference portion of the shaft 115 is at the position of the origin in the up-down direction until the tip 113a of the nozzle 113 contacts the top side of the reference member 400. The control section 111 can calculate the lifting/lowering distance L6 as the lifting/lowering distance of the shaft 115 determined by sensing the rotation direction and rotation amount of the lifting/lowering motor 126. The control section 111 stores the calculated lifting/lowering distance L6 on the storage section 112.

At Step S407, the control section 111 puts the dispensing apparatus 11 in the stand-by mode (waiting state) in a state where a positional adjustment of the dispensing nozzle 113 is being made. Since the dispensing apparatus 11 is in a state where a positional adjustment of the dispensing nozzle 113 is being made, the image-capturing section 122 has been installed on the arm 114 by an operator.

After Step S407, the control section 111 executes the same processes as the processes at Steps S402 to S406.

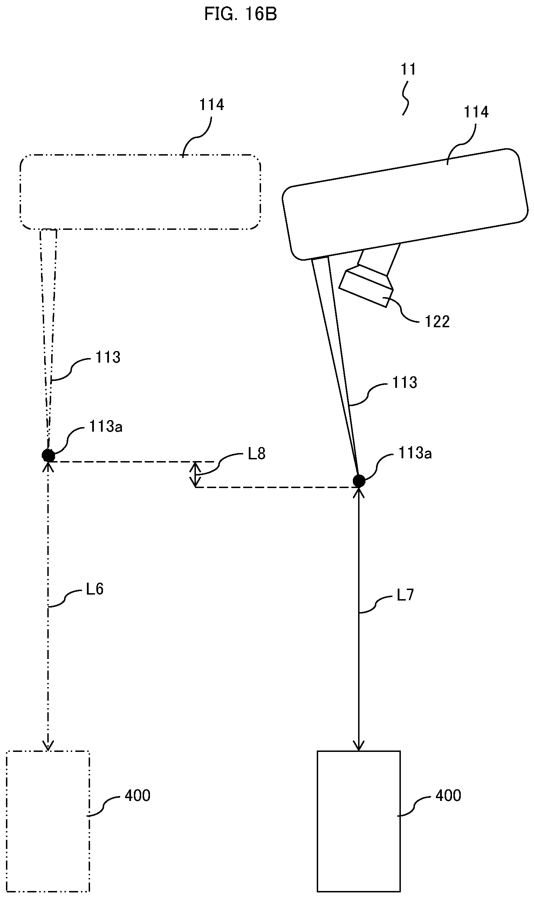

FIG. 16B is a figure depicting the arm 114 and the dispensing nozzle 113 of the dispensing apparatus 11 after the end of Step S403 performed after Step S407. Since the arm 114 is provided with the image-capturing section 122, the posture of the dispensing apparatus 11 has changed from the posture of the dispensing apparatus 11 with the arm 114 being not provided with the image-capturing section 122 as depicted in FIG. 16A.

In FIG. 16B, the arm 114 and the dispensing nozzle 113 depicted in FIG. 16A are represented by two-dot chain lines in order to depict the postural change caused by the configurational change of the dispensing apparatus 11 (whether or not the image-capturing section 122 is installed) in an easy-to-understand manner. As compared with the case where the arm 114 is not provided with the image-capturing section 122, when the arm 114 is provided with the image-capturing section 122, the orientation of the arm 114 changes, and the position in the up-down direction of the tip 113a of the nozzle 113 also changes.

The explanation is given with reference to FIG. 15 again.

At Step S406 performed after Step S407, the control section 111 calculates a lifting/lowering distance L7 (FIG. 16B) by which the tip 113a of the nozzle 113 has moved since the reference portion of the shaft 115 is at the position of the origin in the up-down direction until the tip 113a of the nozzle 113 contacts the reference member 400, and stores the calculated lifting/lowering distance L7 on the storage section 112.

At Step S408, the control section 111 calculates a difference L8 between the lifting/lowering distance L6 and the lifting/lowering distance L7. The lifting/lowering distance difference L8 is a value representing a positional change in the up-down direction of the tip 113a of the nozzle 113 generated depending on whether or not the image-capturing section 122 is installed, and represents the postural change of the dispensing apparatus 11 caused by the configurational change of the dispensing apparatus 11.

In the manner above, the automatic analyzing apparatus 10 according to the present embodiment can measure a postural change caused by a configurational change of the dispensing apparatus 11 (whether or not the image-capturing section 122 is installed). Note that the example depicted in FIG. 16B depicts an example in which the tip 113a of the nozzle 113 has approached the reference member 400 due to a postural change of the dispensing apparatus 11, that is, an example in which the lifting/lowering distance L7 is shorter than the lifting/lowering distance L6. In this case, the control section 111 determines the difference L8 between the lifting/lowering distance L6 and the lifting/lowering distance L7 by calculation of L8 = L6 - L7. If the posture of the dispensing apparatus 11 changes, there is also a case where the tip 113a of the nozzle 113 moves apart from the reference member 400, that is, a case where the lifting/lowering distance L7 is longer than the lifting/lowering distance L6. In this case, the control section 111 determines the difference L8 between the lifting/lowering distance L6 and the lifting/lowering distance L7 by calculation of L8 = L7 - L6.

When the target position 202 of the tip 113a of the nozzle 113 or the position of the tip 113a of the nozzle 113 in the output image 201 is calibrated, the automatic analyzing apparatus 10 according to the present embodiment determines the difference L8 between the lifting/lowering distance L6 and the lifting/lowering distance L7, and also determines the relative height L2 (the distance in the up-down direction between the tip 113a of the nozzle 113 and the upper end of the dispensation target object 200) by using the image-capturing section 122 similarly to the automatic analyzing apparatus 10 according to the first to third embodiments. Then, the control section 111 determines a new relative height L2r by adding or subtracting the difference L8 to or from the relative height L2, and determines the positional calibration direction 203 and the positional calibration amount 204 by using the new relative height L2r (Step S107 in FIG. 4 and FIG. 7). For example, the control section 111 determines the new relative height L2r by L2r = L2 + L8 in the case of the example (L7 < L6) depicted in FIG. 16B, and determines the new relative height L2r by L2r = L2 - L8 in the case of L7 > L6.

Note that the lifting/lowering distance L6 and the lifting/lowering distance L7 can be determined not from the rotation direction and rotation amount of the lifting/lowering motor 126, but also similarly by the procedure explained in the second embodiment using a sensor included outside the dispensing apparatus 11, for example, the external image-capturing section 300 explained in the second embodiment (FIG. 9). Accordingly, the difference L8 between the lifting/lowering distance L6 and the lifting/lowering distance L7 can be determined using a sensor (e.g., the external image-capturing section 300) provided outside the dispensing apparatus 11.

In addition, a postural change caused by a configurational change of the dispensing apparatus 11 (whether or not the image-capturing section 122 is installed) can be determined not by the procedure depicted in FIG. 15, but also from an image captured by the image-capturing section 122. For example, in a case where the difference L8 between the lifting/lowering distance L6 and the lifting/lowering distance L7 is small, it is difficult to determine the difference L8 by the procedure depicted in FIG. 15 in some cases. In such a case, a postural change (a positional change of the tip 113a of the nozzle 113) caused by a configurational change of the dispensing apparatus 11 is preferably determined from an image captured by the image-capturing section 122.

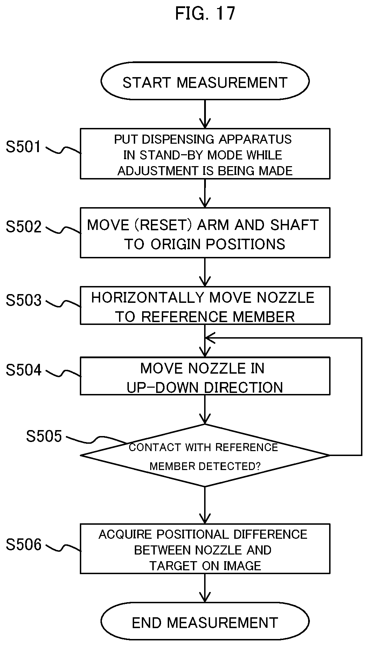

FIG. 17 is a flowchart depicting the procedure of a process of measuring a postural change caused by a configurational change of the dispensing apparatus 11, from an image captured by the image-capturing section 122. Also in the procedure depicted in FIG. 17, a positional change of the tip 113a of the nozzle 113 is measured using the reference member 400.

A target which is a reference point for specifying the position of the tip 113a of the nozzle 113 is set on the top side of the reference member 400. It is assumed that the dispensing nozzle 113 has been adjusted such that the position of the tip 113a is aligned with the position of the target when the tip 113a of the nozzle 113 contacts the top side of the reference member 400 in a state where the automatic analyzing apparatus 10 is in operation (a state where the image-capturing section 122 is not installed on the arm 114). For example, the contact detection sensor 120 can be used for the positional adjustment of the tip 113a.

At Step S501, the control section 111 puts the dispensing apparatus 11 in the stand-by mode (waiting state) in a state where a positional adjustment of the dispensing nozzle 113 is being made. Since the dispensing apparatus 11 is in a state where a positional adjustment of the dispensing nozzle 113 is being made, the image-capturing section 122 has been installed on the arm 114.

At Steps S502 to S505, the same processes as Steps S402 to S405 in FIG. 15 are executed.

At Step S506, the image-capturing section 122 captures an image of an area including the reference member 400 and the tip 113a of the nozzle 113 in a state where the tip 113a of the nozzle 113 is in contact with the top side of the reference member 400. The control section 111 acquires the difference P1 between the position of the tip 113a of the nozzle 113 and the position of the target in the output image captured by the image-capturing section 122.

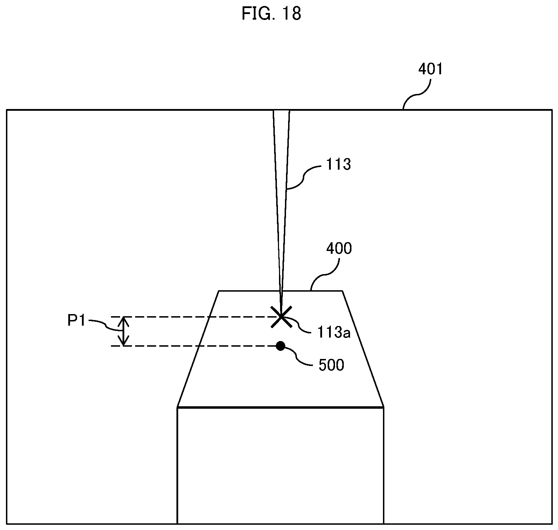

FIG. 18 is a figure depicting an example of an output image 401 captured by the image-capturing section 122. The output image 401 includes the reference member 400, a target 500 set on the reference member 400, and the tip 113a of the nozzle 113.

The dispensing apparatus 11 in the output image 401 depicted in FIG. 18 is in a state where a positional adjustment of the dispensing nozzle 113 is being made (a state where the image-capturing section 122 is installed on the arm 114). Accordingly, the position of the tip 113a of the nozzle 113 in FIG. 18 is different from a position in a state where the automatic analyzing apparatus 10 is in operation (a state where the image-capturing section 122 is not installed on the arm 114). That is, the position of the tip 113a of the nozzle 113 in FIG. 18 is not aligned with the position of the target 500 since the posture of the dispensing apparatus 11 has changed.

In view of this, the control section 111 determines the difference P1 between the position of the tip 113a of the nozzle 113 and the position of the target 500 in the output image 401. For example, the difference P1 can be represented by the number of pixels in the output image 401. The difference P1 is a value representing a positional change in the up-down direction of the tip 113a of the nozzle 113 generated depending on whether or not the image-capturing section 122 is installed, and represents the postural change of the dispensing apparatus 11 caused by the configurational change of the dispensing apparatus 11. In a case where the image-capturing section 122 is not installed on the arm 114, the difference P1 = 0.

In this manner, a postural change caused by a configurational change of the dispensing apparatus 11 (whether or not the image-capturing section 122 is installed) can be measured as the difference P1 also by the procedure depicted in FIG. 17.

When the target position 202 of the tip 113a of the nozzle 113 or the position of the tip 113a of the nozzle 113 in the output image 201 is calibrated, the control section 111 determines the difference P1 between the position of the tip 113a of the nozzle 113 and the position of the target 500 in the output image 401, and also acquires the output image 201 by using the image-capturing section 122 (Step S106 in FIG. 4 and FIG. 6) similarly to the automatic analyzing apparatus 10 according to the first to third embodiments. Then, the control section 111 determines a new positional calibration amount 204 by adding or subtracting the difference P1 to or from the positional calibration amount 204 (Step S107 in FIG. 4 and FIGS. 6 and 7) in the acquired output image 201, and calculates the calibrated target position 205 (Step S108 in FIG. 4 and FIG. 6) in the output image 201 by using the positional calibration direction 203 and the new positional calibration amount 204.

In the example depicted in FIG. 18, the position of the tip 113a of the nozzle 113 is above the position of the target 500 in the output image 401. In this case, the control section 111 determines the new positional calibration amount 204 by subtracting the difference P1 from the positional calibration amount 204 acquired at Step S107 in FIG. 4. The positional calibration direction 203 is reversed in a case where a value of the positional calibration amount 204 acquired at Step S107 in FIG. 4 is changed to a value of the new positional calibration amount 204 from positive to negative or from negative to positive.

The automatic analyzing apparatus 10 according to the present embodiment can adjust the position of the dispensing nozzle 113 taking into consideration a postural change caused by a configurational change of the dispensing apparatus 11 (whether or not the image-capturing section 122 is installed on the arm 114), even if the image-capturing section 122 that can be attached to and removed from the arm 114 is used. Since the image-capturing section 122 is not installed on the arm 114 when the automatic analyzing apparatus 10 is performing analysis, the load that the arm 114 otherwise receives from the image-capturing section 122 can be reduced.

As explained above, the automatic analyzing apparatus 10 according to the first to fourth embodiments can adjust the position of the dispensing nozzle 113 taking into consideration a postural change caused by a configurational change of the dispensing apparatus 11 (whether or not the image-capturing section 122 is installed on the arm 114), and can precisely adjust the position of the dispensing nozzle 113 relative to the dispensation target object 200 in a short period of time.

Note that the present invention is not limited to the embodiments described above, and various modifications can be made to the present invention. For example, the embodiments described above are explained in detail in order to explain the present invention in an easy-to-understand manner, and the present invention is not necessarily limited to embodiments including all the constituent elements explained. In addition, some of the constituent elements of an embodiment can also be replaced with constituent elements of another embodiment. In addition, constituent elements of an embodiment can also be added to the constituent elements of another embodiment. In addition, some of the constituent elements of each embodiment can be deleted, additionally have other constituent elements, or be replaced with other constituent elements.

### Description of Reference Characters

- 10:: Automatic analyzing apparatus
- 11:: Dispensing apparatus
- 100:: Sample container
- 101:: Sample rack
- 102:: Reagent bottle
- 103:: Reagent disk
- 104:: Reaction cell
- 105:: Reaction disk
- 106:: Sample dispensing mechanism
- 107:: Reagent dispensing mechanism
- 108:: Stirring unit
- 109:: Measurement unit
- 110:: Cleaning unit
- 111:: Control section
- 112:: Storage section
- 113:: Dispensing nozzle
- 113a:: Tip of nozzle
- 114:: Arm
- 115:: Shaft
- 116:: Pressure sensor
- 117:: Syringe pump
- 118:: Pipe
- 119:: Solenoid valve
- 120:: Contact detection sensor
- 121:: Drive section
- 121a:: Rotation drive section
- 121b:: Lifting/lowering drive section
- 122:: Image-capturing section
- 123:: Rotation motor
- 124:: Rotation transmission mechanism
- 125:: Rotation origin sensor
- 126:: Lifting/lowering motor
- 127:: Lifting/lowering transmission mechanism
- 128:: Lifting/lowering origin sensor
- 200:: Dispensation target object
- 201:: Output image
- 202:: Target position
- 203:: Positional calibration direction
- 204:: Positional calibration amount
- 205:: Calibrated target position
- 207:: Calibrated tip position
- 300:: External image-capturing section
- 301:: Output image
- 400:: Reference member
- 401:: Output image
- 500:: Target

## Claims

1. An automatic analyzing apparatus comprising:
a dispensing apparatus including a dispensing nozzle that suctions and discharges liquid;
a dispensation target object which is a container that contains the liquid suctioned and discharged by the dispensing nozzle;
an image-capturing section that captures an image of the dispensing nozzle and the dispensation target object; and
a control section that controls the dispensing apparatus and the image-capturing section, wherein
it is assumed that a distance in an up-down direction between a tip of the dispensing nozzle and an upper end of the dispensation target object is a relative height of the dispensing nozzle and the dispensation target object, and
the control section acquires the relative height, and, by using a pre-given relation between the relative height and the number of calibration pixels, calibrates a target position of the tip of the dispensing nozzle on the dispensation target object or calibrates a position of the tip of the dispensing nozzle in the image captured by the image-capturing section.

2. The automatic analyzing apparatus according to claim 1, comprising:
a motor that moves the dispensing nozzle in the up-down direction, wherein
the control section causes the motor to move, in the up-down direction, the dispensing nozzle from a reference position, calculates a moving distance in the up-down direction of the dispensing nozzle from a rotation amount of the motor, and acquires the relative height by using the moving distance.

3. The automatic analyzing apparatus according to claim 1, comprising:
a second image-capturing section different from the image-capturing section, wherein
the second image-capturing section captures an image of the dispensing nozzle and the dispensation target object, and
the control section calculates the relative height from the image captured by the second image-capturing section.

4. The automatic analyzing apparatus according to claim 1, comprising:
a reference member which is an object that the tip of the dispensing nozzle can contact, wherein
the control section calculates the relative height from a distance in the up-down direction between a top side of the reference member and an upper end of the dispensation target object and a moving distance in the up-down direction of the dispensing nozzle at a time when the dispensing nozzle is moved in the up-down direction from a position at which the tip contacts the top side of the reference member.

5. The automatic analyzing apparatus according to claim 1, comprising:
a reference member which is an object that the tip of the dispensing nozzle can contact, wherein
the image-capturing section can be attached to and removed from the dispensing apparatus, and
the control section calculates a value representing a positional change in the up-down direction of the tip of the dispensing nozzle between a case where the image-capturing section is installed on the dispensing apparatus and a case where the image-capturing section is not installed on the dispensing apparatus, and calibrates the target position or the position of the tip by using the value representing the change.

6. The automatic analyzing apparatus according to claim 5, wherein
the control section determines a lifting/lowering distance of the tip of the dispensing nozzle at a time when the tip of the dispensing nozzle is caused to contact a top side of the reference member by moving the dispensing nozzle in the up-down direction from a reference position in each of the case where the image-capturing section is not installed on the dispensing apparatus and the case where the image-capturing section is installed on the dispensing apparatus, and
the control section calculates, as the value representing the change, a difference between the lifting/lowering distance in the case where the image-capturing section is not installed on the dispensing apparatus and the lifting/lowering distance in the case where the image-capturing section is installed on the dispensing apparatus.

7. The automatic analyzing apparatus according to claim 5, wherein
a reference point which is a position of the tip of the dispensing nozzle at a time when the tip contacts a top side of the reference member in the case where the image-capturing section is not installed on the dispensing apparatus is set on the top side of the reference member, and
the control section causes the tip of the dispensing nozzle to contact the top side of the reference member by moving in the up-down direction the dispensing nozzle from a reference position in the case where the image-capturing section is installed on the dispensing apparatus, and calculates, as the value representing the change, a difference between the position of the tip of the dispensing nozzle and a position of the reference point in an image captured by the image-capturing section in a state where the tip is in contact with the top side of the reference member.
